# FASCICULE DE BREVET EUROPEEN

(11) **EP 3 732 763 B1**
(45) Date de publication et mention de la délivrance du brevet: **16.07.2025**
(21) Numéro de dépôt: 18842448.5
(22) Date de dépôt: 24.12.2018
(51) Int. Cl.: H02J 7/00, H01M 10/48

(54) **BATTERIE D'ACCUMULATEURS ELECTRIQUES**
BATTERIEPACK
BATTERY PACK

(30) Priorité: 27.12.2017 FR 1763249
(43) Date de publication de la demande: 04.11.2020
(73) Titulaire: Commissariat à l'Energie Atomique et aux Energies Alternatives, 75015 Paris (FR)
(72) Inventeur: BACQUET, Sylvain, 38470 CHASSELAY (FR); FERNANDEZ, Eric, 38760 SAINT PAUL DE VARCES (FR); CASSARINO, Leandro, 33400 TALENCE (FR); DESPESSE, Ghislain, 38340 VOREPPE (FR); LOPEZ, Yan, 38140 RENAGE (FR); THOMAS, Remy, 38130 ECHIROLLES (FR)
(74) Mandataire: Cabinet Beaumont
(86) Numéro de dépôt international: PCT/FR2018/053543
(87) Numéro de publication internationale: WO 2019/129991

(56) Documents cités:
- US-A- 5 656 915
- US-A1- 2014 077 595

## Description

### Domaine

La présente invention concerne une batterie d'accumulateurs électriques, également appelée pack batterie.

### Exposé de l'art antérieur

Il est connu de réaliser une batterie comprenant plusieurs étages ou modules dans chacun desquels des accumulateurs, également appelés cellules, peuvent être connectés en série ou en parallèle par des interrupteurs commandables. Une telle batterie est adaptée à fournir une tension dont la forme d'onde peut varier dans le temps en faisant varier au cours du temps la connexion des cellules via la fermeture ou l'ouverture des interrupteurs.

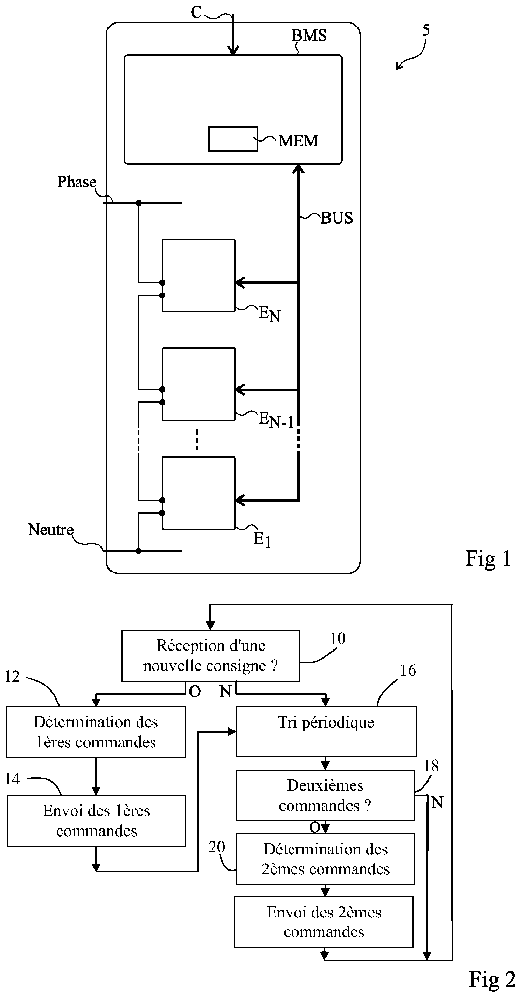

La figure 1 représente un exemple d'une telle batterie 5. La batterie 5 comprend N modules E₁ à E_{N}. Le nombre N est un nombre entier pouvant être compris entre 1 et 50. Chaque module comprend une borne positive B+ et une borne négative B- et plusieurs cellules, non représentées, pouvant être connectées entre elles en série et/ou en parallèle par l'intermédiaire d'interrupteurs, non représentés, entre les bornes B+ et B-. Les modules E₁ à E_{N} peuvent être connectés en série entre une première borne Neutre de la batterie 5 et une deuxième borne Phase de la batterie 5. Un exemple d'une telle batterie est décrit dans la demande de brevet WO 2012/117110.

La batterie 5 comprend un circuit BMS de commande des modules E₁ à E_{N}, appelé circuit de commande maître par la suite. Le circuit de commande maître BMS peut échanger des données avec chaque module E₁ à E_{N} par l'intermédiaire d'un bus bidirectionnel BUS de transmission de données. Chaque module E₁ à E_{N} comprend un circuit adapté à commander les interrupteurs du module à partir des commandes fournies par le circuit de commande maître BMS. Ce circuit de commande est appelé circuit de commande esclave par la suite. Chaque module peut comprendre, en outre, des capteurs, non représentés, par exemple des capteurs de la tension aux bornes de chaque cellule du module, des capteurs du courant fourni par chaque cellule du module et/ou des capteurs de la température de chaque cellule du module. Le circuit de commande esclave de chaque module E₁ à E_{N} est adapté à transmettre au circuit de commande maître BMS des données représentatives des mesures de tensions, de courants et/ou de températures par le bus de transmission de données BUS.

Le circuit de commande maître BMS peut comprendre un capteur de la tension entre les bornes phase et neutre ainsi qu'un capteur de courant global et un capteur de température. Le circuit de commande maître BMS est adapté à recevoir une consigne C et à sélectionner les cellules à connecter ou à déconnecter pour chaque module de façon à répondre à la consigne. La consigne C peut être une consigne de tension ou de courant, les cellules à connecter ou à déconnecter pour chaque module étant alors sélectionnées pour obtenir la tension et/ou le courant souhaités entre les bornes Phase et Neutre de la batterie 5. A titre de variante, la consigne C peut être une consigne d'un nombre d'accumulateurs à connecter en série et/ou en parallèle entre les bornes Phase et Neutre de la batterie 5, les cellules à connecter ou à déconnecter pour chaque module étant alors sélectionnées pour obtenir le nombre d'accumulateurs connectés en série et/ou en parallèle entre les bornes Phase et Neutre de la batterie 5 demandé par la consigne. Le circuit de commande maître BMS fournit alors des commandes aux modules par l'intermédiaire du bus de transmission de données BUS à partir desquelles le circuit de commande esclave de chaque module connecte ou déconnecte les cellules selon la configuration souhaitée.

Il est souhaitable que la sélection des cellules à connecter/déconnecter soit réalisée en assurant que chaque cellule fonctionne dans sa plage de fonctionnement optimale en fonction des mesures de tensions, de courants et de température fournies par les modules. En particulier, il est souhaitable de réaliser un équilibrage des cellules, c'est-à-dire que la sélection des cellules soit réalisée de façon que les écarts entre les états de charge des cellules soient en permanence les plus faibles possibles. Il est en outre souhaitable que la sélection des cellules tienne compte d'une éventuelle défaillance d'une cellule de façon, par exemple, à exclure cette cellule de la sélection.

Pour effectuer la fonction d'équilibrage, le circuit de commande maître BMS peut déterminer un classement des cellules selon des niveaux de priorité, les cellules les plus prioritaires du classement étant celles qui devraient être sélectionnées les premières. Le classement de priorités est susceptible d'évoluer au cours du fonctionnement de la batterie, notamment suite à l'évolution des états de charges des cellules ou suite à la défaillance d'une cellule.

Il est souhaitable que le circuit de commande maître BMS tienne compte du classement de priorités lors de la détermination de la sélection de cellules et en particulier tienne compte de l'évolution du classement de priorités dans le temps.

Pour certaines applications, la consigne reçue par le circuit de gestion BMS peut varier rapidement de sorte qu'il peut être difficile pour le circuit de commande maître BMS de sélectionner les cellules à connecter/déconnecter pour suivre la consigne tout en prenant en compte une modification du classement de priorités.

Les documents US 2014/077595 et US 5 656 915 des procédés de commande de batteries.

### Résumé

Ainsi, un objet d'un mode de réalisation est de prévoir une batterie qui pallie au moins certains des inconvénients des batteries décrites précédemment.

Un autre objet d'un mode de réalisation est que la transmission des commandes du circuit de commande maître de la batterie aux circuits de commande esclaves des modules pour suivre la consigne ne soit pas perturbée par la modification du classement de priorités.

Ainsi, un mode de réalisation prévoit un procédé de commande d'une batterie et une batterie tels que définis dans les revendications.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, décrite précédemment, représente, de façon partielle et schématique, un exemple d'une batterie d'accumulateurs ;
la figure 2 est un schéma par blocs illustrant un procédé de connexion/déconnexion des cellules d'une batterie ;
la figure 3 représente, de façon partielle et schématique, un mode de réalisation d'un module de la batterie de la figure 1 ; et
la figure 4 représente, de façon partielle et schématique, un mode de réalisation d'une batterie d'accumulateurs.

### Description détaillée

Dans la description qui suit divers exemples, modes de réalisation et variantes sont exposés. Nonobstant la façon dont ils sont nommés, seuls font partie de la présente invention, ceux couverts par les revendications.

De mêmes éléments ont été désignés par de mêmes références dans les différentes figures. Par souci de clarté, seuls les éléments utiles à la compréhension des modes de réalisation décrits ont été représentés et sont détaillés. En particulier, les fonctions classiques réalisées par un circuit de commande maître d'une batterie d'accumulateurs telles que l'équilibrage des cellules sont bien connues de l'homme du métier et ne sont pas décrites plus en détail par la suite. Dans la suite de la description, les expressions "sensiblement", "environ", "approximativement" et "de l'ordre de" signifient "à 10 % près", de préférence à 5 % près.

Un mode de réalisation d'un procédé de commande d'un système à cellules commutées va être décrit dans le cas d'une batterie à accumulateurs commutés pour laquelle les cellules correspondent à des accumulateurs commutés. Toutefois, les présents modes de réalisation s'appliquent à tout type de système à cellules commutées adapté à fournir une tension variable à une charge. Chaque cellule du système à cellules commutées peut correspondre à un élément de stockage de charges électriques ou à un générateur électrique. Un exemple d'élément de stockage de charges électriques est par exemple un accumulateur électrique ou un condensateur. Un exemple de générateur électrique est par exemple une pile à combustible, une pile zinc-air, une cellule photovoltaïque ou un système de récupération d'énergie, notamment une mini-éolienne ou une mini-turbine. Le système à cellules commutées peut comprendre seulement des éléments de stockage de charges électriques, seulement des générateurs électriques ou à la fois des éléments de stockage de charges électriques et des générateurs électriques. Lorsque le système à cellules commutées comprend seulement des générateurs électriques, l'utilisation est théoriquement seulement en mode décharge. Néanmoins, en cas de puissance réactive, pour des brefs passages par une puissance négative à chaque période, l'inertie du générateur peut suffire à lisser la puissance, par exemple en raison de l'inertie de rotation et des capacités parasites. En outre, chaque générateur peut être connecté en parallèle d'un élément résistif, afin d'accepter des puissances négatives, en dissipant cette énergie. En fonctionnement, le système est destiné à être relié à un dispositif qui absorbe ou fournit de la puissance selon l'application envisagée. A titre d'exemple, ce dispositif correspond à une machine électrique, par exemple à un moteur électrique, ou au réseau de distribution électrique.

Le circuit de commande maître BMS peut correspondre à un circuit dédié et/ou peut comprendre un processeur, par exemple un microprocesseur ou un microcontrôleur, adapté à exécuter des instructions d'un programme d'ordinateur stocké dans une mémoire. Le circuit de commande maître BMS comprend notamment une mémoire MEM de stockage de données.

Selon un mode de réalisation, le circuit de commande maître utilise une table de sélection pour sélectionner une cellule et des cellules lorsque des opérations de connexion/déconnexion de cellules sont à réaliser. Selon un mode de réalisation, le circuit de commande maître BMS transmet des premières commandes correspondant à des ordres de connexion/déconnexion des cellules aux circuits de commande esclaves pour suivre la consigne et transmet des deuxièmes commandes correspondant à des ordres de connexion/déconnexion des cellules aux circuits de commande esclaves pour suivre une modification de la table de sélection suite au changement du classement de priorités.

Selon un mode de réalisation, la prise en compte des modifications du classement de priorité est réalisée de façon progressive dans la table de sélection. A chaque étape de mise à jour de la table de sélection, seule une partie de la table de sélection est traitée par le circuit de commande maître BMS. De préférence, à chaque étape de mise à jour de la table de sélection, seule une ligne de la table de sélection est traitée par le circuit de commande maître BMS. Selon un mode de réalisation, avant chaque étape de mise à jour de la table de sélection, le circuit de commande vérifie si une nouvelle consigne a été reçue de sorte que la transmission des premières commandes est réalisée de façon prioritaire par rapport à la transmission des deuxièmes commandes.

La figure 2 est un schéma-bloc par blocs illustrant un procédé de connexion/déconnexion des cellules pouvant être mis en oeuvre par la batterie 5 représentée en figure 1.

A l'étape 10, le circuit de commande maître BMS détermine si une nouvelle consigne C a été reçue. Si une nouvelle consigne C a été reçue, le procédé se poursuit à l'étape 12.

A l'étape 12, le circuit de commande BMS détermine des premières commandes pour suivre la nouvelle consigne. Le procédé se poursuit à l'étape 14.

A l'étape 14, les premières commandes sont transmises par le circuit de commande maître BMS aux circuits de commande esclaves des étages E₁ à E_{N} par le bus de transmission de données BUS. Le procédé se poursuit à l'étape 16.

Si, à l'étape 10, une nouvelle consigne C n'a pas été reçue, le procédé se poursuit à l'étape 16.

A titre de variante, l'étape 10 peut ne pas être présente et les étapes 12 et 14 peuvent être exécutées à chaque cycle. Lorsque la consigne C ne varie pas, les premières commandes sont néanmoins déterminées à l'étape 12 pour suivre la valeur inchangée de la consigne C et ces premières commandes sont transmises à l'étape 14 par le circuit de commande maître BMS aux circuits de commande esclaves des étages E₁ à E_{N} par le bus de transmission de données BUS.

A l'étape 16, le circuit de commande maître BMS effectue une mise à jour partielle de la table de sélection comme cela est décrit plus en détails par la suite. Le procédé se poursuit à l'étape 18.

A l'étape 18, le circuit de commande maître BMS détermine si l'étape 16 de mise à jour de la table de sélection nécessite la transmission des deuxièmes commandes de connexion/déconnexion aux circuits de commande esclaves des étages E₁ à E_{N}. Si l'étape 16 de mise à jour partielle de la table de sélection ne nécessite pas la transmission des deuxièmes commandes de connexion/déconnexion, le procédé se poursuit à l'étape 10. Si l'étape 16 de mise à jour partielle de la table de sélection nécessite la transmission des deuxièmes commandes de connexion/déconnexion, le procédé se poursuit à l'étape 20.

A l'étape 20, le circuit de commande BMS détermine des deuxièmes commandes pour suivre la mise à jour de la table de sélection. Le procédé se poursuit à l'étape 22.

A l'étape 22, les deuxièmes données sont transmises par le circuit de commande maître BMS aux circuits de commande esclaves des étages E₁ à E_{N} par le bus de transmission de données BUS.

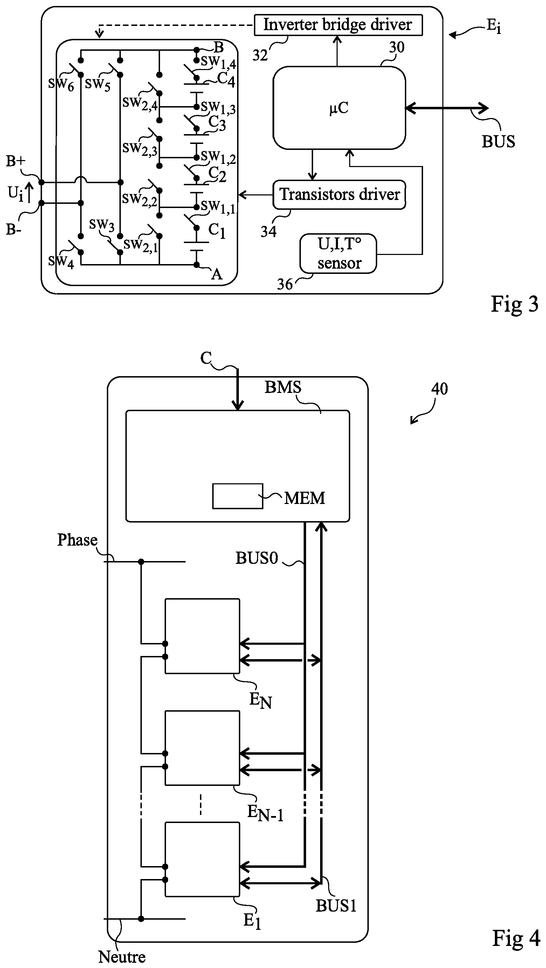

La figure 3 représente un mode de réalisation du module Eᵢ, où i varie de 1 à N.

Selon le présent mode de réalisation, le module Eᵢ est adapté à fournir une tension Uᵢ entre la borne positive B+ et la borne négative B-. Le module Eᵢ comprend des cellules C₁ à C_{M} où M est un nombre entier compris entre 2 et 10, de préférence entre 2 et 5, quatre cellules C₁, C₂, C₃ et C₄ étant représentées à titre d'exemple en figure 3. Les cellules C₁ à C_{M} sont reliées entre elles et aux bornes B+ et B- par des interrupteurs. Dans le présent mode de réalisation, pour chaque cellule Cₖ, k étant un nombre entier variant de 1 à M, le module Eᵢ comprend un premier interrupteur SW_{1,k} en série avec la cellule Cₖ et un deuxième interrupteur SW_{2,k} en parallèle de l'ensemble comprenant la cellule Cₖ et l'interrupteur SW_{1,k}. Les M ensembles comprenant la cellule Cₖ et le premier interrupteur SW_{1,k} sont disposés en série entre un noeud A et un noeud B. La commande des interrupteurs SW_{1,k} et SW_{2,k}, k variant de 1 à M, permet de mettre en série entre les noeuds A et B, 1 à M cellules parmi les M cellules C₁ à C_{M}. Dans le présent mode de réalisation, le module Eᵢ comprend en outre un pont inverseur, également appelé pont en H, entre les noeuds A et B et les bornes B+ et B- qui permet d'appliquer la tension présente entre les noeuds A et B entre les bornes B+ et B- dans les deux sens. Selon un mode de réalisation, le pont inverseur comprend un interrupteur SW₃ reliant le noeud A à la borne B+, un interrupteur SW₄ reliant le noeud A à la borne B-, un interrupteur SW₅ reliant le noeud B à la borne B+ et un interrupteur SW₆ reliant le noeud B à la borne B-. A titre d'exemple chaque interrupteur SW_{1,k} et SW_{2,k}, k variant de 1 à M, SW₃, SW₄, SW₅ et SW₆ peut correspondre à transistor à effet de champ à grille isolée, également appelé transistor MOS, notamment un transistor MOS de puissance, par exemple un transistor MOS à canal N.

Chaque module Eᵢ comprend, en outre, le circuit de commande esclave 30 (µC) adapté à échanger des données émises par le circuit de commande maître BMS sur le bus de transmission de données BUS. Le circuit de commande esclave 30 peut correspondre à un circuit dédié ou peut comprendre un processeur, par exemple un microprocesseur ou un microcontrôleur, adapté à exécuter des instructions d'un programme d'ordinateur stocké dans une mémoire.

Chaque module Eᵢ comprend, en outre, un circuit de pilotage 32 (Inverter bridge driver) relié aux interrupteurs SW₃, SW₄, SW₅ et SW₆ du pont inverseur et un circuit de pilotage 34 (Transistors driver) relié aux interrupteurs SW_{1,k} et SW_{2,k}, k variant de 1 à M. Chaque circuit de pilotage 32, 34 est adapté à convertir les signaux de commande fournis par le circuit de commande esclave 30 en signaux adaptés à la commande des interrupteurs.

Chaque module Eᵢ comprend, en outre, des capteurs 36 (U, I, T° sensor) reliés au circuit de commande esclave 30. Le module Eᵢ peut comprendre, pour chaque cellule Cₖ, un capteur de température adapté à mesurer la température de la cellule Cₖ. Le module Eᵢ peut en outre comprendre, pour chaque cellule Cₖ, un capteur de tension adapté à mesurer la tension aux bornes de la cellule Cₖ. Le module Eᵢ peut en outre comprendre un capteur de courant adapté à mesurer le courant circulant au noeud A ou au noeud B. Le circuit de commande esclave 30 de chaque module Eᵢ est adapté à transmettre des troisièmes données au circuit de commande maître BMS sur le bus de transmission de données BUS représentatives des mesures réalisées par les capteurs 30 du module Eᵢ. Le nombre et le type de capteurs dépend notamment de l'agencement des cellules du module Eᵢ. Dans l'agencement de cellules représenté en figure 3, un seul capteur du courant circulant au noeud A ou au noeud B peut être prévu.

Dans le mode de réalisation de module Eᵢ de batterie illustré en figure 3, un ordre de connexion de la cellule Cₖ du module Eᵢ signifie que la cellule Cₖ doit être connectée en série entre les noeuds A et B du module Eᵢ, ce qui est obtenu en fermant l'interrupteur SW_{1,k} et en ouvrant l'interrupteur SW_{2,k}, et un ordre de déconnexion de la cellule Cₖ du module Eᵢ signifie que la cellule Cₖ ne doit pas être connectée en série entre les noeuds A et B du module Eᵢ, ce qui est obtenu en ouvrant l'interrupteur SW_{1,k} et en fermant l'interrupteur SW_{2,k}. Toutefois, pour un agencement différent des cellules Cₖ du module Eᵢ dans lequel les cellules Cₖ peuvent être agencées en série et/ou en parallèle entre elles entre les noeuds A et B, un ordre de connexion d'une cellule Cₖ précise en outre dans quelle configuration, série ou parallèle, la cellule Cₖ se trouve par rapport aux autres cellules du module Eᵢ.

Selon un mode de réalisation, la table de sélection est stockée dans la mémoire MEM du circuit de commande maître BMS sous la forme d'un tableau, chaque ligne du tableau correspondant par exemple à une ligne de la mémoire MEM. Pour une batterie comprenant N cellules, la table de sélection comprend N lignes. Dans les exemples de tables de sélection décrits par la suite, N est égal à 160. La table de sélection comprend une première colonne, appelée "N° Cellule" par la suite, dans laquelle sont stockés des identifiants des cellules de la batterie. A titre d'exemple, pour une batterie comprenant N cellules, les identifiants de cellule vont de 1 à N. La table de sélection comprend une deuxième colonne, appelée "Priorité", dans laquelle sont stockés les niveaux de priorité des cellules. A titre d'exemple, pour une batterie comprenant N cellules, les niveaux de priorité des cellules vont de 1 à N, le niveau de priorité "1" étant le plus important et le niveau de priorité "N" étant le moins important. Le circuit de commande maître BMS utilise des premier et deuxième pointeurs associés à la table de sélection. Le premier pointeur est appelé "pointeur de suivi de consigne" et le deuxième pointeur est appelé "pointeur de mise à jour". Ces pointeurs désignent chacun l'une des lignes de la table de sélection. Le pointeur de suivi de consigne est représentatif du nombre de cellules devant être connectées pour suivre la consigne C. Lorsque le pointeur de suivi de consigne désigne la ligne P de la table de sélection, où P varie de 1 à N, cela signifie que les cellules correspondant aux lignes 1 à P de la table de sélection doivent être connectées. Le pointeur de mise à jour est représentatif de l'avancée de la mise à jour de la table de sélection pour tenir compte de changements des niveaux de priorité des cellules. Lorsque le pointeur de suivi de consigne désigne la ligne Q de la table de sélection, où Q varie de 1 à N, cela signifie que la mise à jour des lignes 1 à Q-1 de la table de sélection a été réalisée et que les niveaux de priorité des cellules aux lignes 1 à Q-1 sont respectivement égaux de 1 à Q-1.

A des fins d'illustration, la table de sélection est représentée par la suite par un tableau dans lequel les deux premières colonnes correspondent aux colonnes "N° Cellule" et "Priorité" de la table de sélection. A des fins d'illustration, il a en outre été ajouté au tableau une troisième colonne intitulée "Connexion" dans laquelle il est indiqué, pour chaque ligne de la table de sélection, par le symbole "o" que la cellule de la ligne doit être connectée et par le symbole "n" que la cellule de la ligne doit être déconnectée. Il a en outre été ajouté au tableau une quatrième colonne intitulée "Pointeur de suivi de consigne" dans laquelle il est indiqué par une croix "x" la ligne de la table de sélection désignée par le pointeur de suivi de consigne. Il a en outre été ajouté au tableau une cinquième colonne intitulée "Pointeur de mise à jour" dans laquelle il est indiqué par une croix "x" la ligne de la table de sélection désignée par le pointeur de mise à jour. Il a en outre été ajouté au tableau une sixième colonne intitulée "Ordre de connexion" dans laquelle il est indiqué les numéros des lignes de la table de sélection qui varient de 1 à N. Lorsqu'une mise à jour complète de la table de sélection est réalisée, les colonnes "Priorité" et "Ordre de connexion" sont identiques.

Un mode de réalisation d'un procédé d'utilisation de la table de sélection lors de la mise en oeuvre du procédé décrit précédemment en relation avec la figure 2 va maintenant être décrit dans le cas de réception d'une nouvelle consigne C par le circuit de commande maître BMS.

A titre d'exemple, on suppose que, avant la réception de la nouvelle consigne C, la table de sélection peut être représentée par le tableau I suivant :

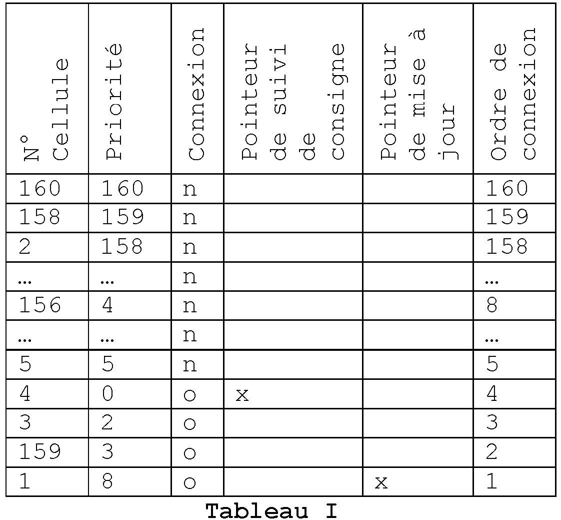

Dans le tableau I, le pointeur de suivi de consigne désigne la ligne 4 de la table de sélection, ce qui signifie que les cellules désignées par les lignes numérotées 1 à 4 de la table de sélection sont connectées, et le pointeur de de mise à jour désigne la ligne n°1 de la table de sélection, ce qui signifie qu'une mise à jour de la table de sélection doit être effectuée pour les lignes numérotées 1 à N.

A titre d'exemple, à l'étape 10, le circuit de commande maître reçoit une consigne pour connecter une cellule supplémentaire. A l'étape 12, le circuit de commande maître BMS déplace le pointeur de suivi de consigne d'un rang pour désigner la ligne n°5, comme cela est représenté dans le tableau II ci-dessous. Le circuit de commande maître BMS détermine alors des premières commandes pour connecter la cellule n°5 qui sont envoyées aux circuits de commande esclaves à l'étape 14.

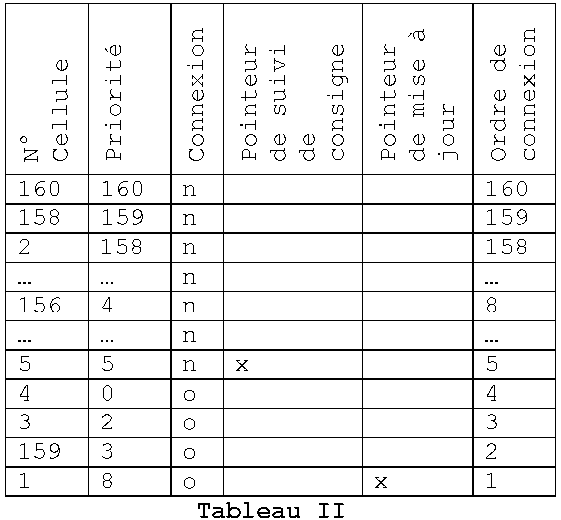

A l'étape 16, le circuit de commande maître BMS détermine que le niveau de priorité de la cellule désignée par le pointeur de mise à jour est égal à 8 alors que son ordre de connexion est égal à 1. Le circuit de commande maître BMS déplace cette cellule à l'ordre de connexion n°8 correspondant à son niveau de priorité et déplace la cellule qui se trouvait à l'ordre de connexion n°8 à l'ordre de connexion n°1. Ceci revient à intervertir dans la table de sélection les lignes n°1 et n°8, ce qui aboutit au tableau III ci-dessous.

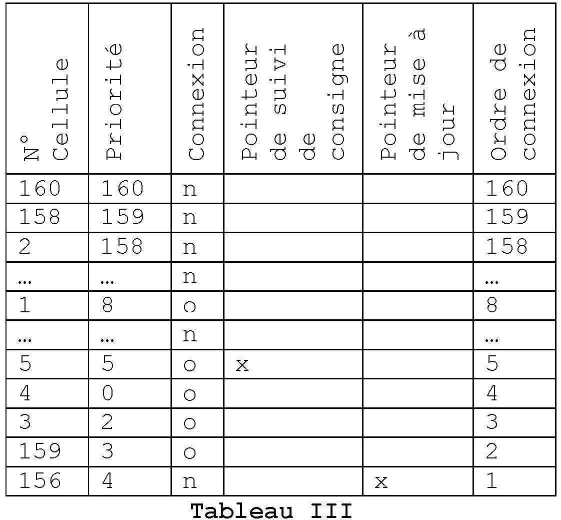

La permutation réalisée a introduit un "trou" de connexion pour le pointeur de suivi de consigne. Il ne doit pas y avoir de cellules connectées dans les lignes de la table de sélection de rang supérieur à la ligne désignée par le pointeur de suivi de consigne et il ne doit pas y avoir de cellules non connectées dans les lignes de la table de sélection de rang inférieur à la ligne désignée par le pointeur de suivi de consigne. Le circuit de commande maître BMS détermine alors à l'étape 20 des deuxièmes commandes pour connecter la cellule n°156 et déconnecter la cellule n°1, ce qui conduit au tableau IV ci-dessous. Ces deuxièmes commandes sont envoyées aux circuits de commande esclaves à l'étape 22 et le procédé se poursuit à l'étape 10.

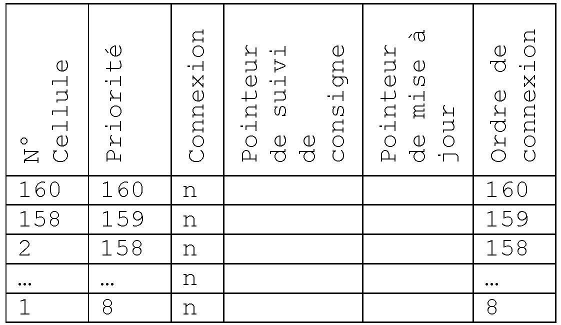

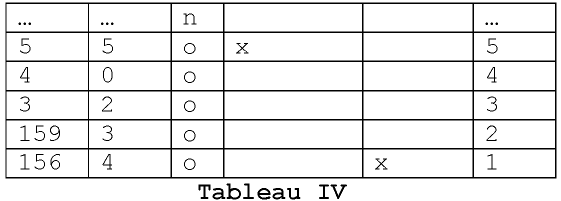

De façon avantageuse, le circuit de commande maître BMS traite une consigne avant de réaliser une mise à jour de la table de sélection. De ce fait on réalise une mise à jour avec l'état du système le plus à jour.

Pour simplifier les explications de la mise à jour de la table de sélection, on peut imaginer que la consigne ne change plus et ne fait donc plus évoluer le pointeur de suivi de consigne ni les états de connexion.

A l'étape 16 suivante, le circuit de commande maître BMS détermine que le niveau de priorité de la cellule désignée par le pointeur de mise à jour est égal à 4 alors que son ordre de connexion est égal à 1. Le circuit de commande maître BMS déplace cette cellule à l'ordre de connexion n°4 correspondant à son niveau de priorité et déplace la cellule qui se trouvait à l'ordre de connexion n°4 à l'ordre de connexion n°1. Ceci revient à intervertir dans la table de sélection les lignes n°1 et n°4, ce qui aboutit au tableau V ci-dessous. Il se trouve que cette permutation ne génère pas de trou dans les connexions, les deux cellules n°4 et n°156 étant connectées. Il n'y a pas de deuxième commande à envoyer et le procédé retourne à l'étape 10.

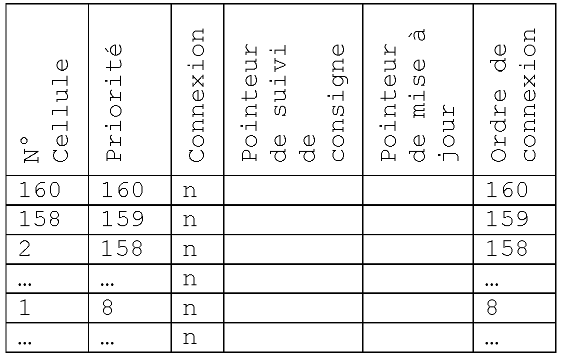

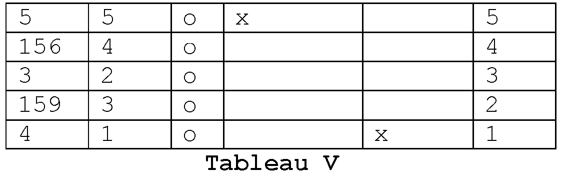

A l'étape 16 suivante, le circuit de commande maître BMS détermine que le niveau de priorité de la cellule désignée par le pointeur de mise à jour est égal à 1 et que son ordre de connexion est égal à 1. Cette cellule est donc bien placée dans la table de sélection. Le pointeur de mise à jour est alors incrémenté et désigne la ligne n°2 de la table de sélection comme cela est représenté sur le tableau VI ci-dessous. Il n'y a pas de deuxième commande à envoyer et le procédé retourne à l'étape 10.

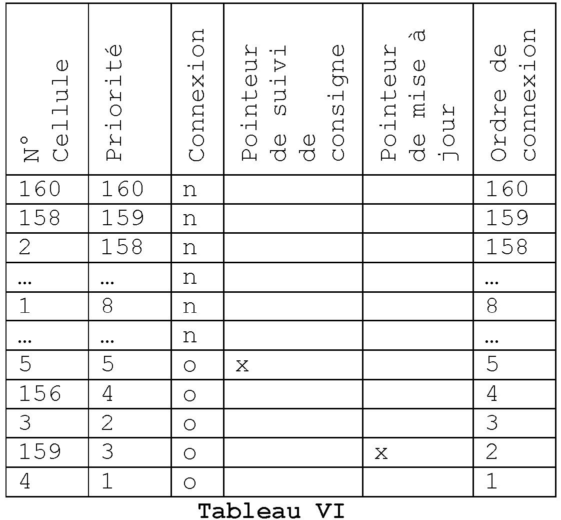

Au cycle suivant, on continue les mêmes opérations, avec cette fois un pointeur de mise à jour qui désigne la ligne n°2 de la table de sélection.

Selon un mode de réalisation, lorsque la mise à jour de la table de sélection est complètement réalisée, ce qui correspond à un pointeur de mise à jour égal à N, le circuit de commande maître BMS peut faire tourner le pointeur de mise à jour dans la table de sélection, sans faire d'autres actions, par exemple en incrémentant le pointeur de mise à jour pour qu'il désigne successivement les lignes 1 à N de la table de sélection, jusqu'à détection d'une incohérence entre l'ordre de connexion et le niveau de priorité de la cellule correspondante.

Un avantage du mode de réalisation décrit précédemment est la rapidité de la réponse de la batterie 5 lors d'une modification de la consigne.

Selon un mode de réalisation du procédé de transmission de données sur le bus BUS, une première ou deuxième commande transmise par le circuit de commande maître BMS est adressée au circuit de commande esclave 12 d'un seul module Eᵢ. Le circuit de commande esclave 12 de chaque module Eᵢ est alors adapté à déterminer si la commande qu'il reçoit lui est destiné. Si cela est le cas, le circuit de commande esclave 12 commande les circuits de pilotage 14 et 16 pour appliquer les ordres de connexion/déconnexion demandés par le circuit de commande maître BMS. A titre d'exemple, les commandes sont transmises sous la forme de trames, chaque trame comprenant un entête contenant l'adresse du module Eᵢ désigné suivi d'octets relatifs à la commande des interrupteurs, et éventuellement suivis d'au moins un octet de contrôle. Un avantage d'un tel mode de réalisation est que la réactivité de la batterie 5 à réception d'une nouvelle consigne C est optimale. En outre, les commutations des interrupteurs des modules Eᵢ sont étalées dans le temps de sorte que la génération de perturbations électromagnétiques est réduite. En outre, un contrôle d'erreur de trame efficace peut être mis en oeuvre.

Selon un autre mode de réalisation du procédé de transmission de données, chaque trame transmise par le circuit de commande maître BMS contient l'ensemble des ordres de connexion/déconnexion pour toutes les cellules Cₖ de tous les modules Eᵢ. Le circuit de commande esclave 12 de chaque module Eᵢ est donc sollicité à chaque trame envoyée par le circuit de commande maître BMS. Le circuit de commande esclave 12 de chaque module Eᵢ est adapté à analyser la trame et en extraire les ordres de connexion/déconnexion des interrupteurs appartenant au module Eᵢ.

La figure 4 représente un mode de réalisation d'une batterie 40. La batterie 40 comprend l'ensemble des éléments de la batterie 5 représentée en figure 1 à la différence que le bus de transmission de données BUS est remplacé par deux bus de transmission de données BUSO et BUS1 qui relient chacun le circuit de commande maître BMS à chaque module E₁ à E_{N}.

Le bus de transmission de données BUSO est un bus rapide, c'est-à-dire un bus sur lequel des données sont transmises avec un débit supérieur à 3 mégabits par seconde, de préférence compris entre 5 mégabits par seconde et 7 mégabits par seconde. Le bus de transmission de données BUSO peut être un bus unidirectionnel. A titre d'exemple, le bus BUSO est un bus selon la norme RS485 utilisé en monodirectionnel.

Le bus BUS1 est un bus lent, c'est-à-dire sur lequel des données sont transmises avec un débit inférieur à 3 mégabits par seconde, de préférence compris entre 0,5 mégabits par seconde et 1 mégabit par seconde. Le bus BUS1 est un bus bidirectionnel. A titre d'exemple, le bus BUS1 est un bus de données CAN, notamment selon la norme ISO 11898 qui de façon avantageuse intègre une gestion de l'arbitrage des communications.

Le bus rapide BUSO est utilisé pour la transmission des premières et deuxièmes commandes fournies par le circuit de commande maître BMS pour suivre la consigne C. Le bus lent BUS1 est utilisé pour l'échange de toutes les autres données entre le circuit de commande maître BMS et chaque module E₁ à E_{N}.

Des modes de réalisation particuliers de la présente invention ont été décrits. Diverses variantes et modifications apparaîtront à l'homme de l'art. Bien que la figure 3 représente un mode de réalisation d'agencement des cellules et des interrupteurs d'un module Eᵢ, il est clair que la structure de chaque module Eᵢ peut être différente. En particulier, la structure de chaque module Eᵢ peut correspondre à l'une des structures décrites dans la demande de brevet WO 2012/117110.

**Tableau VI**

| | | | | | |
|---|---|---|---|---|---|
| 3 | 2 | ○ | | | 3 |
| 159 | 3 | ○ | | x | 2 |
| 4 | 1 | ○ | | | 1 |

Au cycle suivant, on continue les mêmes opérations, avec cette fois un pointeur de mise à jour qui désigne la ligne n°2 de la table de sélection.

Selon un mode de réalisation, lorsque la mise à jour de la table de sélection est complètement réalisée, ce qui correspond à un pointeur de mise à jour égal à N, le circuit de commande maître BMS peut faire tourner le pointeur de mise à jour dans la table de sélection, sans faire d'autres actions, par exemple en incrémentant le pointeur de mise à jour pour qu'il désigne successivement les lignes 1 à N de la table de sélection, jusqu'à détection d'une incohérence entre l'ordre de connexion et le niveau de priorité de la cellule correspondante.

Un avantage du mode de réalisation décrit précédemment est la rapidité de la réponse de la batterie 5 lors d'une modification de la consigne.

Selon un mode de réalisation du procédé de transmission de données sur le bus BUS, une première ou deuxième commande transmise par le circuit de commande maître BMS est adressée au circuit de commande esclave 12 d'un seul module Eᵢ. Le circuit de commande esclave 12 de chaque module Eᵢ est alors adapté à déterminer si la commande qu'il reçoit lui est destiné. Si cela est le cas, le circuit de commande esclave 12 commande les circuits de pilotage 14 et 16 pour appliquer les ordres de connexion/déconnexion demandés par le circuit de commande maître BMS. A titre d'exemple, les commandes sont transmises sous la forme de trames, chaque trame comprenant un entête contenant l'adresse du module Eᵢ désigné suivi d'octets relatifs à la commande des interrupteurs, et éventuellement suivis d'au moins un octet de contrôle. Un avantage d'un tel mode de réalisation est que la réactivité de la batterie 5 à réception d'une nouvelle consigne C est optimale. En outre, les commutations des interrupteurs des modules Eᵢ sont étalées dans le temps de sorte que la génération de perturbations électromagnétiques est réduite. En outre, un contrôle d'erreur de trame efficace peut être mis en oeuvre.

Selon un autre mode de réalisation du procédé de transmission de données, chaque trame transmise par le circuit de commande maître BMS contient l'ensemble des ordres de connexion/déconnexion pour toutes les cellules Cₖ de tous les modules Eᵢ. Le circuit de commande esclave 12 de chaque module Eᵢ est donc sollicité à chaque trame envoyée par le circuit de commande maître BMS. Le circuit de commande esclave 12 de chaque module Eᵢ est adapté à analyser la trame et en extraire les ordres de connexion/déconnexion des interrupteurs appartenant au module Eᵢ.

La figure 4 représente un mode de réalisation d'une batterie 40. La batterie 40 comprend l'ensemble des éléments de la batterie 5 représentée en figure 1 à la différence que le bus de transmission de données BUS est remplacé par deux bus de transmission de données BUSO et BUS1 qui relient chacun le circuit de commande maître BMS à chaque module E₁ à E_{N}.

Le bus de transmission de données BUSO est un bus rapide, c'est-à-dire un bus sur lequel des données sont transmises avec un débit supérieur à 3 mégabits par seconde, de préférence compris entre 5 mégabits par seconde et 7 mégabits par seconde. Le bus de transmission de données BUSO peut être un bus unidirectionnel. A titre d'exemple, le bus BUSO est un bus selon la norme RS485 utilisé en monodirectionnel.

Le bus BUS1 est un bus lent, c'est-à-dire sur lequel des données sont transmises avec un débit inférieur à 3 mégabits par seconde, de préférence compris entre 0,5 mégabits par seconde et 1 mégabit par seconde. Le bus BUS1 est un bus bidirectionnel. A titre d'exemple, le bus BUS1 est un bus de données CAN, notamment selon la norme ISO 11898 qui de façon avantageuse intègre une gestion de l'arbitrage des communications.

Le bus rapide BUSO est utilisé pour la transmission des premières et deuxièmes commandes fournies par le circuit de commande maître BMS pour suivre la consigne **C.** Le bus lent BUS1 est utilisé pour l'échange de toutes les autres données entre le circuit de commande maître BMS et chaque module E₁ à E_{N}.

Des modes de réalisation particuliers de la présente invention ont été décrits. Diverses variantes et modifications apparaîtront à l'homme de l'art. Bien que la figure 3 représente un mode de réalisation d'agencement des cellules et des interrupteurs d'un module Eᵢ, il est clair que la structure de chaque module Eᵢ peut être différente. En particulier, la structure de chaque module Eᵢ peut correspondre à l'une des structures décrites dans la demande de brevet WO 2012/117110.

## Revendications

1. Procédé de commande d'un système électrique (5 ; 40) comprenant un premier circuit de commande (BMS) et plusieurs modules (Eᵢ) disposés en série entre des première et deuxième bornes (Phase, Neutre), chaque module (Eᵢ) comprenant des troisième et quatrième bornes (B+, B-), au moins l'une des troisième et quatrième bornes de chaque module étant reliée à l'une des troisième et quatrième bornes d'un autre module, chaque module comprenant des cellules électriques (C₁, C₂, C₃, C₄) et des interrupteurs reliant les cellules entre elles et aux troisième et quatrième bornes du module et un deuxième circuit de commande (12) des interrupteurs, le système électrique comprenant en outre au moins un premier bus de transmission de données (BUS ; BUS0, BUS1) reliant le premier circuit de commande à chaque deuxième circuit de commande, **caractérisé en ce que** le premier circuit de commande comprend une mémoire (MEM) dans laquelle sont stockées, pour chaque cellule électrique, un identifiant de la cellule électrique et un niveau de priorité de connexion de la cellule électrique parmi des niveaux de priorité, le procédé comprenant les étapes successives suivantes :
a) réception par le premier circuit de commande (BMS) d'une nouvelle consigne (C) ;
b) transmission, par le premier circuit de commande aux deuxièmes circuits de commande, de premières commandes de connexion ou de déconnexion d'au moins l'une des cellules électriques des modules pour suivre ladite consigne ; et
c) transmission, par le premier circuit de commande aux deuxièmes circuits de commande, de deuxièmes commandes de connexion de l'une des cellules électriques et de déconnexion d'une autre cellule électrique parmi les cellules électriques
dans lequel les lignes de la mémoire sont agencées selon des rangs croissants et dans lequel l'étape c) comprend les étapes successives suivantes :
d) intervertir des première et deuxième lignes de la mémoire si le niveau de priorité de la cellule électrique à la première ligne est supérieur au rang de la première ligne ; et
e) transmettre, par le premier circuit de commande aux deuxièmes circuits de commande, les deuxièmes commandes de connexion de la cellule électrique ayant l'identifiant à la deuxième ligne avant l'interversion et de déconnexion de la cellule électrique ayant l'identifiant à la première ligne avant l'interversion dans le cas où la cellule électrique ayant l'identifiant à la deuxième ligne avant l'interversion est déconnecté et la cellule électrique ayant l'identifiant à la première ligne avant l'interversion est connecté.

2. Procédé de commande selon la revendication 1, dans lequel la consigne est choisie dans le groupe comprenant une consigne de fourniture d'une tension entre les première et deuxième bornes (Phase, Neutre), une consigne de fourniture d'un courant à la première borne ou une consigne de nombre de cellules électriques.

3. Procédé de commande selon la revendication 1 ou 2, dans lequel le premier circuit de commande (BMS) utilise un premier pointeur désignant une troisième ligne de la mémoire (MEM) et dans lequel, à l'étape a), le circuit de commande (BMS) modifie le pointeur pour désigner une quatrième ligne de la mémoire, le nombre de lignes entre la troisième ligne et la quatrième ligne, en comptant la quatrième ligne, étant égal au nombre de cellules à connecter ou à déconnecter pour suivre la consigne.

4. Procédé de commande selon l'une quelconque des revendications 1 à 3, dans lequel le premier circuit de commande (BMS) utilise un deuxième pointeur désignant une cinquième ligne de la mémoire (MEM) et dans lequel le premier circuit de commande modifie le deuxième pointeur pour désigner une sixième ligne de la mémoire adjacente à la cinquième ligne lorsque le niveau de priorité de la cellule électrique à la cinquième ligne est égal au rang de la cinquième ligne.

5. Procédé de commande selon l'une quelconque des revendications 1 à 4, dans lequel les étapes a), b) et c) sont répétées de façon cyclique, les étapes a) et b) n'étant pas présentes au moins pour un cycle lorsque la consigne ne varie pas audit cycle.

6. Système électrique (5 ; 40) comprenant un premier circuit de commande (BMS) et plusieurs modules (Eᵢ) disposés en série entre des première et deuxième bornes (Phase, Neutre), chaque module (Eᵢ) comprenant des troisième et quatrième bornes (B+, B-), au moins l'une des troisième et quatrième bornes de chaque module étant reliée à l'une des troisième et quatrième bornes d'un autre module, chaque module comprenant des cellules électriques (C₁, C₂, C₃, C₄) et des interrupteurs reliant les cellules entre elles et aux troisième et quatrième bornes du module et un deuxième circuit de commande (12) des interrupteurs, le système électrique comprenant en outre au moins un premier bus de transmission de données (BUS ; BUS0, BUS1) reliant le premier circuit de commande à chaque deuxième circuit de commande, **caractérisé en ce que** le premier circuit de commande comprend une mémoire (MEM) dans laquelle sont stockées, pour chaque cellule électrique, un identifiant de la cellule électrique et un niveau de priorité de connexion de la cellule électrique parmi des niveaux de priorité, le premier circuit de commande étant adapté à :
a) recevoir une nouvelle consigne (C) de fourniture d'une tension et/ou d'un courant entre les première et deuxième bornes (Phase, Neutre) ;
b) transmettre aux deuxièmes circuits de commande des premières commandes de connexion ou de déconnexion d'au moins l'un des cellules électriques des modules pour suivre ladite consigne ; et
c) transmettre aux deuxièmes circuits de commande des deuxièmes commandes de connexion de l'un des cellules électriques et de déconnexion d'une autre cellule électrique parmi les cellules électriques,
dans lequel les lignes de la mémoire sont agencées selon des rangs croissants et dans lequel l'étape c) comprend les étapes successives suivantes :
d) intervertir des première et deuxième lignes de la mémoire si le niveau de priorité de la cellule électrique à la première ligne est supérieur au rang de la première ligne ; et
e) transmettre, par le premier circuit de commande aux deuxièmes circuits de commande, les deuxièmes commandes de connexion de la cellule électrique ayant l'identifiant à la deuxième ligne avant l'interversion et de déconnexion de la cellule électrique ayant l'identifiant à la première ligne avant l'interversion dans le cas où la cellule électrique ayant l'identifiant à la deuxième ligne avant l'interversion est déconnecté et la cellule électrique ayant l'identifiant à la première ligne avant l'interversion est connecté.

## Patentansprüche

1. Verfahren zum Steuern eines elektrischen Systems (5; 40), aufweisend eine erste Steuerschaltung (BMS) und mehrere Module (Eᵢ), die in Reihe zwischen ersten und zweiten Anschlüssen (Phase, Neutral) angeordnet sind, wobei jedes Modul (Eᵢ) dritte und vierte Anschlüsse (B+, B-) aufweist, wobei mindestens einer der dritten und vierten Anschlüsse jedes Moduls mit einem der dritten und vierten Anschlüsse eines anderen Moduls gekoppelt ist, wobei jedes Modul elektrische Zellen (C1, C2, C3, C4) und Schalter, die die Zellen miteinander und mit den dritten und vierten Anschlüssen des Moduls verbinden, sowie eine zweite Steuerschaltung (12) für die Schalter aufweist, wobei das elektrische System ferner mindestens einen ersten Datenübertragungsbus (BUS; BUSO, BUS1) aufweist, der die erste Steuerschaltung mit jeder zweiten Steuerschaltung koppelt, **dadurch gekennzeichnet, dass** die erste Steuerschaltung einen Speicher (MEM) aufweist, der für jede elektrische Zelle eine Kennung der elektrischen Zelle und eine Prioritätsstufe für den Anschluss der elektrischen Zelle unter den darin gespeicherten Prioritätsstufen enthält, wobei das Verfahren die folgenden aufeinanderfolgenden Schritte aufweist:
a) Empfangen eines neuen Sollwerts (C) durch die erste Steuerschaltung (BMS);
b) Übertragen erster Steuersignale durch die erste Steuerschaltung an die zweiten Steuerschaltungen zum Verbinden oder Trennen mindestens einer der elektrischen Zellen der Module, um dem Sollwert zu folgen; und
c) Übertragen zweiter Steuersignale durch die erste Steuerschaltung an die zweiten Steuerschaltungen zum Verbinden einer der elektrischen Zellen und zum Trennen einer anderen elektrischen Zelle unter den elektrischen Zellen,
wobei die Speicherzeilen in aufsteigender Rangfolge angeordnet sind und wobei Schritt c) die folgenden aufeinanderfolgenden Schritte aufweist:
d) Austauschen der ersten und zweiten Speicherzeile, wenn die Prioritätsstufe der elektrischen Zelle in der ersten Zeile größer ist als der Rang der ersten Zeile; und
e) Übertragen der zweiten Steuersignale durch die erste Steuerschaltung an die zweiten Steuerschaltungen zum Verbinden der elektrischen Zelle mit der Kennung in der zweiten Reihe vor dem Austausch und zum Trennen der elektrischen Zelle mit der Kennung in der ersten Reihe vor dem Austausch, wenn die elektrische Zelle mit der Kennung in der zweiten Reihe vor dem Austausch getrennt ist und die elektrische Zelle mit der Kennung in der ersten Reihe vor dem Austausch verbunden ist.

2. Steuerverfahren nach Anspruch 1, wobei der Sollwert ausgewählt ist aus der Gruppe aufweisend einen Sollwert für die Lieferung einer Spannung zwischen den ersten und zweiten Anschlüssen (Phase, Neutral), einen Sollwert für die Lieferung eines Stroms am ersten Anschluss oder einen Sollwert für die Anzahl der elektrischen Zellen.

3. Steuerverfahren nach Anspruch 1 oder 2, wobei die erste Steuerschaltung (BMS) einen ersten Zeiger verwendet, der eine dritte Zeile im Speicher (MEM) bezeichnet, und wobei in Schritt a) die Steuerschaltung (BMS) den Zeiger so modifiziert, dass er eine vierte Zeile im Speicher bezeichnet, wobei die Anzahl der Zeilen zwischen der dritten Zeile und der vierten Zeile, die vierte Zeile mitgezählt, gleich der Anzahl der Zellen ist, die verbunden oder getrennt werden sollen, um dem Sollwert zu folgen.

4. Steuerverfahren nach einem der Ansprüche 1 bis 3, wobei die erste Steuerschaltung (BMS) einen zweiten Zeiger verwendet, der eine fünfte Zeile im Speicher (MEM) bezeichnet, und die erste Steuerschaltung den zweiten Zeiger so modifiziert, dass er eine sechste Zeile im Speicher benachbart zur fünften Zeile bezeichnet, wenn die Prioritätsstufe der elektrischen Zelle in der fünften Zeile gleich dem Rang der fünften Zeile ist.

5. Steuerverfahren nach einem der Ansprüche 1 bis 4, wobei die Schritte a), b) und c) zyklisch wiederholt werden, wobei die Schritte a) und b) mindestens für einen Zyklus wegfallen, wenn der Sollwert in diesem Zyklus nicht variiert.

6. Elektrisches System (5; 40) aufweisend eine ersten Steuerschaltung (BMS) und mehreren Modulen (Eᵢ), die in Reihe zwischen ersten und zweiten Anschlüssen (Phase, Neutral) angeordnet sind, wobei jedes Modul (Eᵢ) dritte und vierte Anschlüsse (B+, B-) aufweist, wobei mindestens einer der dritten und vierten Anschlüsse jedes Moduls mit einem der dritten und vierten Anschlüsse eines anderen Moduls gekoppelt ist, wobei jedes Modul elektrische Zellen (C1, C2, C3, C4) und Schalter, die die Zellen miteinander und mit den dritten und vierten Anschlüssen des Moduls koppeln, und eine zweite Steuerschaltung (12) für die Schalter aufweist, wobei das elektrische System ferner mindestens einen ersten Datenübertragungsbus (BUS; BUSO, BUS1) aufweist, der die erste Steuerschaltung mit jeder zweiten Steuerschaltung koppelt, **dadurch gekennzeichnet, dass** die erste Steuerschaltung einen Speicher (MEM) aufweist, der für jede elektrische Zelle eine Kennung der elektrischen Zelle und eine Prioritätsstufe für den Anschluss der elektrischen Zelle unter den darin gespeicherten Prioritätsstufen aufweist, wobei die erste Steuerschaltung in der Lage ist zum:
a) Empfangen eines neuen Sollwerts (C) für die Lieferung einer Spannung und/oder eines Stroms zwischen dem ersten und dem zweiten Anschluss (Phase, Neutral);
b) Übertragen erster Steuersignale an die zweiten Steuerschaltungen zum Verbinden oder Trennen mindestens einer der elektrischen Zellen der Module, um dem Sollwert zu folgen; und
c) Übertragen zweiter Steuersignale an die zweiten Steuerschaltungen zum Verbinden einer der elektrischen Zellen und zum Trennen einer anderen elektrischen Zelle unter den elektrischen Zellen,
wobei die Speicherzeilen in aufsteigenden Rängen angeordnet sind und wobei Schritt c) die folgenden aufeinanderfolgenden Schritte aufweist:
d) Austauschen der ersten und zweiten Speicherzeilen, wenn die Prioritätsstufe der elektrischen Zelle in der ersten Zeile größer ist als der Rang der ersten Zeile; und
e) Übertragen der zweiten Steuersignale durch die erste Steuerschaltung an die zweiten Steuerschaltungen zum Verbinden der elektrischen Zelle mit der Kennung in der zweiten Reihe vor dem Austausch und zum Trennen der elektrischen Zelle mit der Kennung in der ersten Reihe vor dem Austausch, wenn die elektrische Zelle mit der Kennung in der zweiten Reihe vor dem Austausch getrennt ist und die elektrische Zelle mit der Kennung in der ersten Reihe vor dem Austausch verbunden ist.

## Claims

1. A method of controlling an electric system (5; 40) comprising a first control circuit (BMS) and a plurality of modules (Eᵢ) arranged in series between first and second terminals (Phase, Neutral), each module (Eᵢ) comprising third and fourth terminals (B+, B-), at least one of the third and fourth terminals of each module being coupled to one of the third and fourth terminals of another module, each module comprising electric cells (C1, C2, C3, C4) and switches coupling the cells together and to the third and fourth terminals of the module and a second switch control circuit (12), the electric system further comprising at least one first data transmission bus (BUS; BUS0, BUS1) coupling the first control circuit to each second control circuit, **characterized in that** the first control circuit comprises a memory (MEM) having, for each electric cell, an identifier of the electric cell and a priority level for the connection of the electric cell among priority levels stored therein, the method comprising the successive steps of:
a) reception by the first control circuit (BMS) of a new set point value (C);
b) transmission, by the first control circuit to the second control circuits, of first control signals for the connection or the disconnection of at least one of the electric cells of the modules to follow said set point value; and
c) transmission, by the first control circuit to the second control circuits, of second control signals for the connection of one of the electric cells and the disconnection of another electric cell among the electric cells,
wherein the memory rows are arranged by increasing ranks and wherein step c) comprises the successive steps of:
d) exchange of the first and second memory rows if the priority level of the electric cell at the first row is greater than the rank of the first row; and
e) transmission, by the first control circuit to the second control circuits, of the second control signals for the connection of the electric cell having the identifier at the second row before the exchange and for the disconnection of the electric cell having the identifier at the first row before the exchange in the case where the electric cell having the identifier at the second row before the exchange is disconnected and the electric cell having the identifier at the first row before the exchange is connected.

2. The control method according to claim 1, wherein the set point value is selected from the group comprising a set point for the delivery of a voltage between the first and second terminals (Phase, Neutral), a set point for the delivery of a current at the first terminal, or a set point for the number of electric cells.

3. The control method according to claim 1 or 2, wherein the first control circuit (BMS) uses a first pointer designating a third row in the memory (MEM) and wherein, at step a), the control circuit (BMS) modifies the pointer to designate a fourth row in the memory, the number of rows between the third row and the fourth row, counting the fourth row, being equal to the number of cells to be connected or disconnected to follow the set point.

4. The control method according to any of claims 1 to 3, wherein the first control circuit (BMS) uses a second pointer designating a fifth row in the memory (MEM) and the first control circuit modifies the second pointer to designate a sixth row in the memory adjacent to the fifth row when the priority level of the electric cell at the fifth row is equal to the rank of the fifth row.

5. The control method according to any of claims 1 to 4, wherein steps a), be, and c) are repeated cyclically, steps a) and b) being absent at least for one cycle when the set point value does not vary at said cycle.

6. An electric system (5; 40) comprising a first control circuit (BMS) and a plurality of modules (Eᵢ) arranged in series between first and second terminals (Phase, Neutral), each module (Eᵢ) comprising third and fourth terminals (B+, B-), at least one of the third and fourth terminals of each module being coupled to one of the third and fourth terminals of another module, each module comprising electric cells (C1, C2, C3, C4) and switches coupling the cells together and to the third and fourth terminals of the module and a second switch control circuit (12), the electric system further comprising at least one first data transmission bus (BUS; BUS0, BUS1) coupling the first control circuit to each second control circuit, **characterized in that** the first control circuit comprises a memory (MEM) having, for each electric cell, an identifier of the electric cell and a priority level for the connection of the electric cell among priority levels stored therein, the first control circuit being capable of:
a) receiving a new set point (C) for the delivery of a voltage and/or of a current between the first and second terminals (Phase, Neutral);
b) transmitting to the second control circuits first control signals for the connection or the disconnection of at least one of the electric cells of the modules to follow said set point; and
c) transmitting to the second control circuits second control signals for the connection of one of the electric cells and the disconnection of another electric cell among the electric cells,
wherein the memory rows are arranged by increasing ranks and wherein step c) comprises the successive steps of:
d) exchange of the first and second memory rows if the priority level of the electric cell at the first row is greater than the rank of the first row; and
e) transmission, by the first control circuit to the second control circuits, of the second control signals for the connection of the electric cell having the identifier at the second row before the exchange and for the disconnection of the electric cell having the identifier at the first row before the exchange in the case where the electric cell having the identifier at the second row before the exchange is disconnected and the electric cell having the identifier at the first row before the exchange is connected.
